# EUROPEAN PATENT SPECIFICATION

(11) **EP 4 086 300 B1**
(45) Date of publication and mention of the grant of the patent: **17.06.2026**
(21) Application number: 21172721.9
(22) Date of filing: 07.05.2021
(51) Int. Cl.: C08K 3/38, C08L 83/04

(54) **SELF-HEALING ELASTOMERS AND METHOD OF MAKING THE SAME**
SELBSTHEILENDE ELASTOMERE UND VERFAHREN ZUR HERSTELLUNG DAVON
ÉLASTOMÈRES AUTO-CICATRISANTS ET LEUR PROCÉDÉ DE FABRICATION

(43) Date of publication of application: 09.11.2022
(73) Proprietor: Oulun Yliopisto, 90014 Oulun Yliopisto (FI)
(72) Inventor: Tolvanen, Jarkko, 90014 Oulun yliopisto (FI); Nelo, Mikko, 90014 Oulun yliopisto (FI); Hannu, Jari, 90014 Oulun yliopisto (FI); Juuti, Jari, 90014 Oulun yliopisto (FI); Jantunen, Heli, 90014 Oulun yliopisto (FI)
(74) Representative: Berggren Oy

(56) References cited:
- WO-A1-2018/137508
- RU-C2- 2 680 827
- WU QI ET AL: "Highly Stretchable and Self-Healing "Solid-Liquid" Elastomer with Strain-Rate Sensing Capability", APPLIED MATERIALS & INTERFACES, vol. 11, no. 21, 29 May 2019 (2019-05-29), US, pages 19534 - 19540, XP55853823, ISSN: 1944-8244, DOI: 10.1021/acsami.9b05230

## Description

### Technical field

The present application relates to self-healing elastomers and methods of making the same.

### Background

Self-healing materials are synthetically-created substances that can have the ability to automatically repair damages, such as cracks or cuts, to themselves.

The self-healing materials in principle may be divided into two systems, intrinsic system and extrinsic system. Self-healing materials belonging to the intrinsic system have a built-in, inherent self-healing ability. Self-healing materials belonging to the intrinsic system may or may not require an external stimulus (light, temperature change, etc.) to initiate the healing process.

The materials belonging to the extrinsic system, on the other hand, acquire the self-healing ability through self-healing ingredients, which are often in the form of capsules or as microvascular networks (i.e. microchannels) within a polymer material. When the material is damaged, said self-healing ingredients, released from the ruptured capsules, cause the polymer to repair by reacting chemically with the surrounding material.

However, these materials of extrinsic system utilizing capsules or microvascular networks are often not suitable for applications relating to soft electronics. For example, capsules and microvascular networks often impair electrical and mechanical properties, and structures containing a self-healing ingredient can leak prematurely under stress, in which case the self-healing ability is completely lost. Also, self-healing ingredients need to be refilled to the networks after damage to restore the self-healing ability. Running out of the self-healing capability in the cases where self-healing is repeatedly required makes them unfeasible for certain applications. This is especially true for devices or systems including such devices that are inherently soft and continuously exposed to changing environments. In some cases, self-healing can be difficult to achieve in soft electronics, for example in a skin-mounted device, if an external stimulus such as high temperature, e.g. above 50°C, is required, or if the required healing time is long. Another drawback that extrinsic systems utilizing capsules or microvascular networks is that they lack reprocessability and/or recyclability.

Therefore, there is a desire to have improved self-healing materials in the intrinsic system, especially for the applications relating to soft electronics.

In 'Highly Stretchable and Self-Healing 'Solid-Liquid' Elastomer with Strain-Rate Sensing Capability', Applied Materials & Interfaces, vol. 11, no. 21, 29 May 2019, pages 19534-19540, Wu Qi et al describe so-called solid-liquid elastomers comprising an interpenetrating network (IPN) of dynamically crosslinked polyborosiloxane (PBS) and permanently cross-linked polydimethylsiloxane (PDMS), which are prepared via reaction of boric acid with PDMS to form PBS, followed by mixing with vinylic PDMS and a curing agent and hot-pressing. These materials display self-healing properties.

### Summary

It is an object of the present invention to provide a new self-healing material that has the intrinsically self-healing ability, improved mechanical properties and transparency. Specifically, the present invention relates to intrinsically self-healing elastomers which can be used in particular in, but not limited to, soft and printed electronics as substrates and as a base material for a wide variety of soft and /or flexible and/or stretchable electronic components, e.g. actuators, energy harvesters, sensors, capacitors, conductors, resistors, insulators, encryption devices.

The intrinsically self-healing material according to the present invention can also be used in mechanical applications as sealants, moisture insulation, rubber spring/dampers, coatings.

It is possible to obtain completely intrinsically self-healing components and devices based on the material. At the moment, none of the self-healing materials in the prior art are as versatile as the self-healing elastomer according to the present invention with respect to the above-mentioned applications.

According to one aspect of the invention, there is provided a method for manufacturing a self-healing elastomer, comprising
- preparing, with respect to the total weight of the self-healing elastomer,
   - 0.1 - 5 wt.% of boron trioxide (B₂O₃) in the form of nanoparticles,
   - 65 - 90 wt.% of hydroxyl-terminated polydimethylsiloxane (PDMS-OH)
   - 5 - 30 wt.%, when measured in combined, of polysiloxane precursors, being
      ∘ a first composition comprising a siloxane base, preferably a polymer containing at least one ethylenically unsaturated group, and preferably also a branched siloxane-based polymer, and optionally a surface modifier which preferably contains at least one ethylenically unsaturated group;
      ∘ a second composition comprising a siloxane crosslinker, wherein the ratio by weight of the first composition and the second composition is 1:1 to 50:1;
- homogeneously mixing B₂O₃ nanoparticles, PDMS-OH, and the first composition, thereby obtaining a mixture,
- reacting the mixture and the second composition at an elevated temperature ranging from 60 °C to 150 °C, endpoints inclusive, thereby obtaining the self-healing elastomer.

The method according to the present invention is a lot simplified and efficient, as compared to the known methods for manufacturing self-healing materials in the prior art. Further, the method according to the present invention results in a novel intrinsically and autonomously self-healing elastomer, herein referred as interpenetrating PBS-PDMS.

Thus, according to another aspect of the invention, there is provided a self-healing elastomer, which is obtainable by the method according the present invention. The self-healing elastomer, interpenetrating PBS-PDMS, comprises an interpenetrating polymer network, comprising a polyborosiloxane-based polymer, and a polydimethylsiloxane-based polymer.

The self-healing elastomer according to the present invention has an unique structure formed by the interpenetrating networks and cross-links and an unique composition, that contribute unprecedented mechanical properties. The self-healing elastomer is capable being stretched more than 20 times of its length and return the original size and form with the original or even better mechanical properties. Further, the self-healing elastomer possesses all in one excellent elasticity, autonomous self-healing efficiency, moisture barrier ability, and transparency, which properties are difficult to achieve simultaneously in the known single material in the prior art. With the self-healing elastomer according to the present invention, it is possible to make devices that meet the waterproof requirements according to the standard IP67 (IP Code, or Ingress Protection Code, sometimes referred to as International Protection Code). Furthermore, the self-healing ability of the self-healing elastomer according to the present invention remains even in challenging conditions, e.g. in freezing conditions (-19°C), underwater, saline water, and supercooled saline water (-19 °C). Furthermore, the self-healing elastomer, interpenetrating PBS-PDMS, belongs to the intrinsic system, thus has better reprocessability and/or recyclability than materials of extrinsic system.

The improved mechanical properties of interpenetrating PBS-PDMS, the self-healing elastomer according to the present invention allow a wide variety of industrial usability, such as in the soft and printed electronics, robots, actuators, and/or as base material for sensor components or sensor component.

The main embodiments are characterized in the independent claims. Various embodiments are disclosed in the dependent claims. The embodiments and examples recited in the claims and the specification are mutually freely combinable unless otherwise explicitly stated.

### Brief description of the drawings

Fig. 1a and Fig. 1b are schematic diagrams of the principle of the method according to the present invention.
Fig.2a to Fig. 2e show the mechanical properties and performance of the self-healing elastomer according to the present invention.
Fig. 3a and Fig. 3b show the self-healing properties of an elastomer, as an example, in ambient conditions, according to the present invention.

### Detailed description

In this specification, percentage values, unless specifically indicated otherwise, are based on weight (w/w). If any numerical ranges are provided, the ranges include also the upper and lower values. The open term "comprise" also includes a closed term "consisting of" as one option.

The term "intrinsic self-healing" or "intrinsically self-healing" or the like as used herein refers to the build-in, inherent self-healing ability of a material. Usually the reversible chemical bonds are involved within the material.

The term "autonomous self-healing" or "autonomously self-healing" or the like as used herein refers to the ability to initiate the self-healing process without external intervention. External intervention may be a temperature change to higher than the room temperature (e.g. 30 °C or more) and/or other stimuli such as pressure, chemicals, humidity, moisture, etc. External intervention may also be a force to be applied to initiate self-healing, e.g. when aligning cut/fractured surfaces, regardless of temperature. Thus, an autonomous self-healing material can heal without intervention at any given room temperature, e.g. 0 - 30 °C.

The term "universal self-healing" or the like as used herein refers to the self-healing ability in not only ambient conditions, but also various other conditions, such as at frozen temperatures down to -140 °C, under water, and etc.

The term "universal self-healing" or the like as used herein refers to the self-healing ability in not only ambient conditions, but also various other conditions, such as at frozen temperatures down to -140 °C, under water, and etc.

The term "interpenetrating network" or "interpenetrating polymer network" or the like as used herein refers to materials comprising two or more networks which are at least partially interlaced on a polymer scale but not covalently bonded to each other. The network cannot be separated unless chemical bonds are broken. Simply mixing/blending two or more polymers does not create an interpenetrating polymer network. The term "interpenetrating PBS-PDMS" thus refers to PBS-PDMS having a interpenetrating network structure, rather than a blend of PBS and PDMS.

There are several desired properties for intrinsically self-healing materials. For example, how much/fast they stretch; how well and how quickly they recover after tension; how quickly, efficiently, and under what conditions they self-heal; how ambient conditions and changes thereof affect the self-healing ability, e.g. temperature, humidity; transparency of materials at the wavelength of visible light at the non-stretched state; their other mechanical properties (stiffness, toughness) are, among other things, important aspects of properties.

However, known intrinsically self-healing materials in the prior art are able to achieve only some of the above-mentioned properties, while other properties are compromised. For example, many tough self-healing materials are often not transparent nor able to heal in universal conditions. Also, with many elastic materials that are capable of recovering from large strains, transparency is poor and healing in universal conditions is not possible. In addition, many intrinsically self-healing materials do not withstand moisture, for example, because water molecules can penetrate their bonds; also, the strength of said materials decreases as the amount of absorbed water molecules increases. It can also lead to significant swelling (weight and dimensions change noticeably) and inability to heal in aqueous medium or in presence of moisture as the water molecules prevent wetting and diffusion of dynamic bonds. Furthermore, known universal self-healing materials in the prior art have very poor mechanical robustness, for example they have low strength at break, low toughness, and/or even low elastic moduli, and/or sufficient elastic moduli only on a severely limited elongation range and poor shape recovery.

Most importantly, in the prior art, there are no materials capable to be stretched in considerable amounts, e.g. more than 15 times of original length, and fully return to their original shape and size when the stress is removed.

The stress-strain behavior of the intrinsically self-healing elastomer according to the present invention differs significantly from other similar materials. There is linear relationship between stress and strain in some embodiments according to the present invention, with a certain strain rate, and to certain extent / limit. These embodiments are in most cases a pristine elastomers, i.e. undamaged elastomers. There is significant strain hardening (increase of stress) on large deformation that can be seen even with some of the pristine elastomers with slow rate. The strain hardening becomes more evident as rate increases and with "aged" elastomers. The linear stress-strain curve and strain hardening differs from most of the elastomers. In this case, the linearity may only be result of using correction factor (assumption of isotropic and incompressible material) when calculating a true stress with pristine elastomers. The strain hardening has been recently shown on some highly stretchable self-healing materials, but these do not heal in various ambient conditions or universal conditions. Typically, without strain hardening the stress becomes constant after large elongation or it may even start to decrease leading to poor strength at break. This unique stress-strain behavior is due to the special structure and composition of the self-healing elastomer according to the present invention, which differs substantially from other intrinsically self-healing materials.

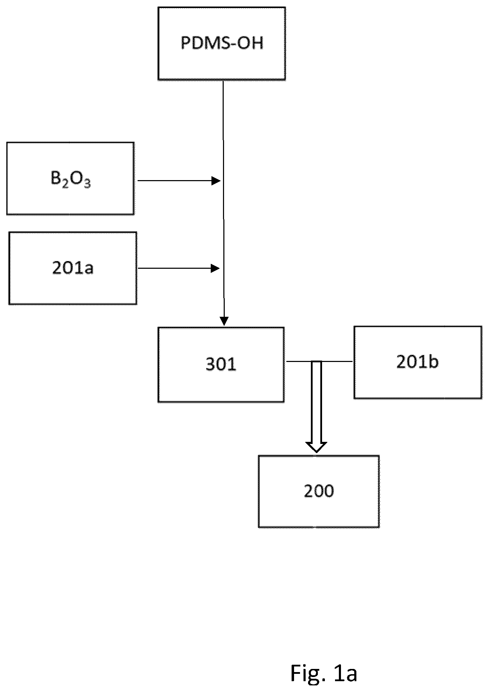

With reference to Fig. 1a, the self-healing elastomer 200 according to the present invention can be made according to a novel method, which comprises
- preparing, with respect to the total weight of the self-healing elastomer 200,
   - 0.1 - 5 wt.% of boron trioxide (B₂O₃) in the form of nanoparticles,
   - 65 - 90 wt.% of hydroxyl-terminated polydimethylsiloxane (PDMS-OH)
   - 5 - 30 wt.%, when measured in combined, of polysiloxane precursors 201, being
      ∘ a first composition 201a comprising a siloxane base, preferably a polymer containing at least one ethylenically unsaturated group , and preferably also a branched siloxane-based polymer, and optionally a surface modifier which preferably contains at least one ethylenically unsaturated group;
      ∘ a second composition 201b comprising a siloxane crosslinker,
      wherein the ratio by weight of the first composition 201a and the second composition 201b is 1:1 to 50:1;
- homogeneously mixing B₂O₃, PDMS-OH, and the first composition 201a, thereby obtaining a mixture 301,
- reacting the mixture 301 and the second composition 201b at an elevated temperature ranging from 60 °C to 150 °C, endpoints inclusive, thereby obtaining the self-healing elastomer 200.

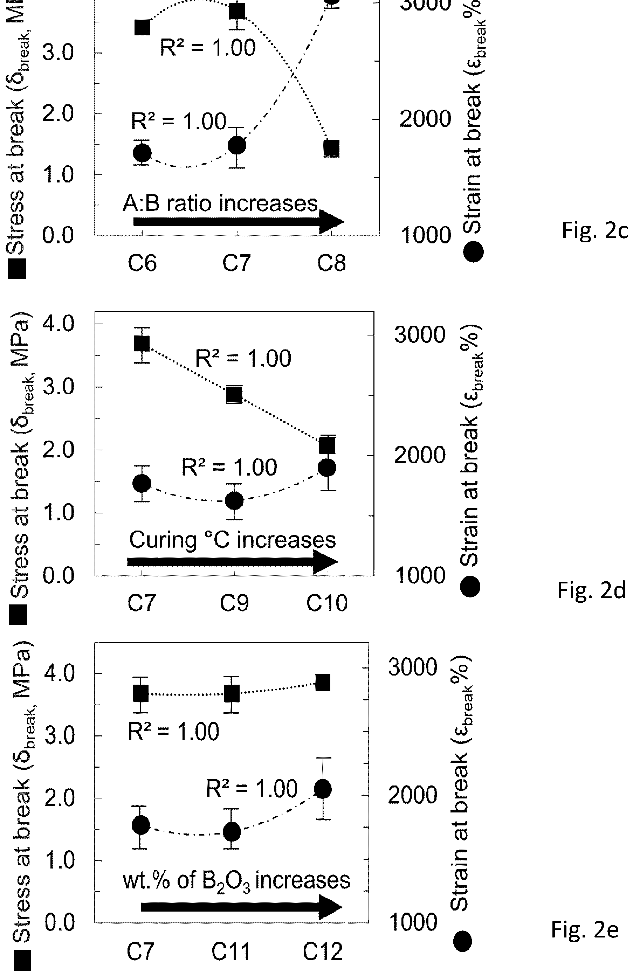

A nanoparticle, as defined herein, refers to a particle of matter that is between 1 and 500 nanometers (nm) in diameter, which can be observed by using, for example, a transmission electron microscope. In the present invention, the average diameter of B₂O₃ nanoparticles is preferably 50 - 200 nm, more preferably between 80 - 100 nm. B₂O₃ nanoparticles provide a large contacting area for the reaction and thus contribute to the reaction efficiency significantly, when compared with non- nanoparticles of B₂O₃. Thus, in the case of using B₂O₃ nanoparticles, less B₂O₃ is need. It is found that the amount of B₂O₃ used affects the mechanical properties in the product, i.e. the resulting self-healing elastomer. For example, by using 1% of B₂O₃ in the method, the product is more elastic than, for example, using 5% of B₂O₃, while other factors are kept constant. Thus, by adjusting the amount of B₂O₃ a variety of products having different mechanical properties according to the practical applications can be achieved. Thus, preferably, the B₂O₃ is in an amount of 0.40 - 3.00 wt.%, more preferably 0.65- 1.90 wt.%, and even more preferably 0.75 - 1.40 wt.%, for example 0.85 wt.%. Fig. 2e shows the effect of amount of B₂O₃ nanoparticles increasing from 0.85 wt.% to 2.12 wt.%. On the other hand, increasing amount of B₂O₃ (from 0.85 wt.%) can be beneficial to a certain extent in the multiphase elastomer as the number of cross-links can be increased. However, increasing amount of B₂O₃ (from 0.85 wt.%) can be beneficial to a certain extent in the multiphase elastomer as the number of cross-links can be increased, because there is residue left in the final product 200.

The length of the polymer chain of PDMS-OH used affects the properties, for example the viscosity, of the thus produced final product, i.e. self-healing elastomer. Thus, the viscosity of the material can be controlled to allow a variety of applications. Also, the effective amount of net-/junctions points (or "cross-links") actually increase as the length of the polymer chains increases as strands occupy "larger" three-dimensional space in a state of the highest conformational entropy (that is without stress). When stress increases there should be even more significant strain-hardening when the effective amount of "cross-links" increases (thus mechanical strength increases).

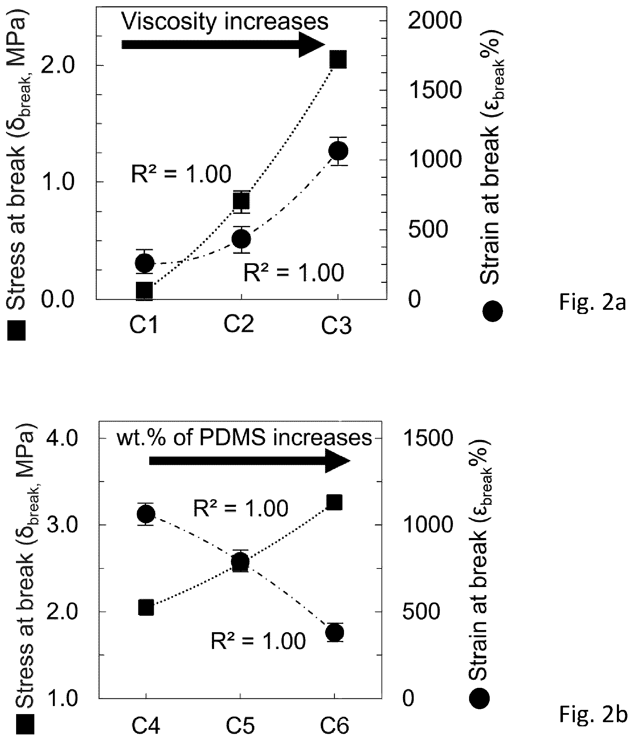

The PDMS-OH has a kinematic viscosity ranging from 850 - 25000 cSt, more preferably 18000-22000 cSt, at 25 °C. A devise, such as Haake Mars 40, complying measurement standard ASTM D2196-20, may be used for determining the kinematic viscosity. It is found that using PDMS-OH having a lower kinematic viscosity, such as 850-1150 cSt, results a softer final elastomer regardless of the other processing conditions. By increasing the kinematic viscosity of PDMS-OH used, it is found that the elastomer becomes increasingly more robust as elastic modulus (E) and stress at break (δ_{break}) increase by over 10-fold (Fig. 2a, viscosity of PDMS-OH increasing from 850-1150 cSt to 18,000-22,000 cSt.) Regardless of the processing conditions or composition, the polymer strength and extensibility should increase with viscosity of PDMS-OH.

The amount of PDMS-OH used in the present method affects the self-healing ability of the final product, i.e. the self-healing elastomer. In order to achieve sufficient self-healing ability while maintain good mechanical properties of the self-healing elastomer, the amount of PDMS-OH used in the present method can be 65 - 90 wt.% of the final product. Preferably, the PDMS-OH used is in an amount of 69-89.5 wt.%, for example 69.3 - 89.1 wt.%, preferably 75 - 88 wt.%, more preferably 77 - 86 wt.%, for example 84 wt.% of the final product, i.e. self-healing elastomer.

As mentioned, the self-healing elastomer, interpenetrating PBS-PDMS, comprises an interpenetrating polymer network of a polyborosiloxane-based polymer (PBS) and a polydimethylsiloxane-based polymer (PDMS). In the interpenetrating polymer network structure, the PBS, produced by reacting B₂O₃ and PDMS-OH, is a novel supramolecular polymer having surprisingly large amount of dynamic bonds, or dipole-dipole interactions, that contribute to the intrinsic self-healing ability. The supramolecular dynamic bonds, such as hydrogen bonds and dative bonds between boron and the oxygen in the Si-O groups, allow self-healing ability to be maintained without deterioration over time. The intrinsic ability of the supramolecular polymer to repair mechanical damage repeatedly is generally based on the continuous ability of dynamic bonds to regenerate between polymer chains when damaged. PBS is a non-Newtonian fluid, whose dynamic viscosity is affected by, among other things, the shear stress. PBS can behave like a solid elastic substance or like a viscous liquid. This depends on the rate of tension, e.g. uniaxial elongation rate. The material is therefore dimensionally unstable, in which case the material does not retain its shape at room temperature when in place. The method of the present invention utilizes a multiphase-strategy, where the idea is to take advantage of the soft and hard phases. In this case, the soft phase allows intrinsic self-healing (i.e. dynamic interactions), while the hard phase adds material rigidity and mechanical strength, as well as allows viscoelastic nature of material and material conversion to elastomer (due to entropy-driven elasticity). The first composition 201a and the second composition 201b according to the present invention contribute to the hard phase after curing.

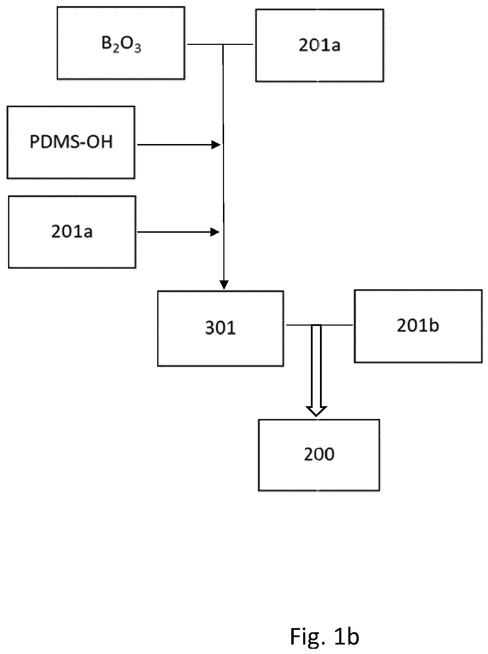

According to the present method, B₂O₃, PDMS-OH, and a first composition 201a comprising a siloxane base are mixed to form a homogeneous mixture 301. The ingredients, i.e. B₂O₃, PDMS-OH, and the first composition 201a, may be all mixed at the same time; alternatively, B₂O₃ may be mixed with PDMS-OH first, followed by mixing in the first composition 201a. In some preferred embodiments, the B₂O₃ may be firstly mixed with a small amount of the first composition 201a homogeneously, followed by mixing the PDMS-OH and the remainder of the first composition 201a, as illustrated in Fig. 1b; this way the homogeneous mixture 301 can be achieved more efficiently. Mixing the first composition 201a in the mixture before adding the next ingredient, i.e. a second composition 201b comprising a siloxane crosslinker, further ensures the homogenous mixture for facilitating the following reaction efficiency and a well-formed interpenetrating polymer network of the final product, i.e. the self-healing elastomer 200.

Optionally and advantageously, the mixing step according to the present method can be combined with applying vacuum degassing, which is beneficial for achieving films with uniform quality without porosity. Applying vacuum degassing when mixing the reagents is especially beneficial when the amounts of used B₂O₃, are larger, for example more than 0.85 wt.% of the total weight of the self-healing elastomer 200.

According to the present invention, the first composition 201a comprises a siloxane base. A siloxane base may also be referred as siloxane base resin, is a siloxane-based polymer containing vinyl groups, or in other words, a siloxane-based polymer containing at least one ethylenically unsaturated group. In some embodiments, the siloxane base is dimethylvinyl-terminated dimethylsiloxane. The first composition 201a can further comprise a surface modifier, for example dimethylvinylated and trimethylated silica. The first composition 201a can further comprise a branched siloxane, preferably containing at least one ethylenically unsaturated group, such as 1 1,1,5,5,5-hexamethyl-3,3-bis[(trimethylsily)oxy]- trisiloxane.

According to the present invention, the second composition 201b comprises a siloxane crosslinker. A crosslinker, or a crosslinking agent, is a molecule which has at least two reactive ends capable of chemically attaching to specific functional groups of the polymer chains. The siloxane crosslinker as disclosed herein is capable of connecting to the polymer chains of the siloxane base comprised in the first composition 201a to create a cross-linked polymer network. The second composition 201b serves as a curing agent for the reaction between the first composition 201a and the second composition 201b. In some embodiments, the siloxane crosslinker is dimethyl, methylhydrogen siloxane. The second composition 201b can further comprise the same siloxane base as in the first composition 201a, for accelerating the cross-linking reaction. The second composition 201b can further comprise a surface modifier, for example dimethylvinylated and trimethylated silica. The second composition 201b can further comprise network formation agent, for example methylvinylcyclosiloxane.

Preferably, the reaction between the first composition 201a and the second composition 201b results in polydimethylsiloxane. Preferably, the resulting polydimethylsiloxane has a low glass transition temperature (Tg) equal to or below -55 °C, or equal to or below -125 °C, or equal to or below -140 °C, to contribute in intrinsic healing and allow efficient healing to take place in cold environments. It is found that the elastomer according to the present invention still maintained self-healing efficiency of η = 50.8 ± 4.7% when healed in a supercooled (-19 °C) NaCl water (26.3 wt.%) for 2 hours, when the polydimethylsiloxane used has a Tg of below -55 °C.

The first composition 201a and the second composition 201b, i.e. polysiloxane precursors 201, contribute to the hard phase of the multi-phase strategy according to the invention. The combined amount of the compositions 201 thus affects the properties of the final product, i.e. self-healing elastomer 200. Thus, the amount can be adjusted according to the actual needs. The combined amount of the first composition 201a and the second composition 201b according to the present invention is advantageously in a range of 10 - 30 wt.% of the final product 200. It is observed that an amount increasing to close to 30wt.% affects the self-healing ability noticeably. An amount of more than 30 wt.% decreases significantly the self-healing ability of the final product 200 and thus is less desirable. On the other hand, an amount of less than 15 wt.%, especially less than 10 wt.%, affects noticeably the mechanical properties, such as Young's modulus, of the final product and thus is less desirable. When the amount of composition 201 is less than 15 wt.%, the elastic modulus, toughness and elasticity decreases, while the self-healing rate could increase. In this case it is possible to change the other processing conditions and or compositions (such as amount of B₂O₃) to restore the desired properties. Fig. 2b shows the effect of the combined amount of the compositions 201, increasing from 15 wt.% to 25 wt.%.

The weight ratio between the first composition 201a and the second composition 201b affects also the behavior and mechanical properties of the final product 200. In general, the weight ratio of the first composition 201a and the second composition 201b being in a range of 1:1 to 50:1 result in a final product 200 with good mechanical properties, while a range between 2.5:1 and 10:1 is more preferable. By increasing the proportion of the second composition 201b, the cross-linking structure of the material increases, leading to reduction of the elasticity/tensile strength and decrease of the hardness/Young's modulus. Fig. 2c shows the effect of the ratio of polymer base 201a to curing agent 201b decreases from 10:1 to 2.5:1. The elongation at break increases as ratio decreases, or as the amount of the second composition increases (201b) (from 50:1 to 2.5:1), but other mechanical properties related to the elasticity, shape recovery, strength, stiffness, elastic modulus decrease when the ratio is close to 2.5:1 (in comparison to composition that has ratio more than 2.5:1; such as 5:1). Also, the polymer may lose it entropy-driven elasticity at large deformation as the number of net/junction points changes (i.e., the "effective" amount of "cross-links" becomes too high).

According to the present invention, the reactions between the ingredients, i.e. B₂O₃ with PDMS-OH, and the first composition 201a with the second composition 201b, happens at an elevated temperature ranging from 60 °C to 150 °C. The reaction temperature for B₂O₃ and PDMS-OH affects how quickly and strongly the nanoparticles react with the hydroxyl group (OH) of the PDMS-OH. Thus the temperature can be adjusted according to the actual needs. An elevated temperature is needed for the hydroxyl group of PDMS-OH to leave and the subsequent reaction to happen. Generally, a reaction temperature of at least 60 °C is sufficient. On the other hand, although B₂O₃ and PDMS-OH may react at a higher temperature up to e.g. 200 °C, the reaction temperature is preferably not more than 150 °C, more preferably not more than 120 °C. It is observed that at a temperature of more than 150 °C, it is more challenging to form a film with a uniformed thickness, because air bubbles form in the material and cause a porous surface. On the other hand, the reaction time and the reaction temperature of the first composition 201a and the second composition 201b may vary. It is noted that the reaction can take place even at room temperature to a certain degree. However, it is found that curing in an elevated temperature, such as 60-150 °C, for a longer period of time, for example 4 hours (and then remainder of the time in a room temperature), contributes the improved elastic modulus and strength at break of the self-healing elastomer, as compared to curing in the same elevated temperature for a shorter period of time, for example 2 hours (and then remainder of the time in a room temperature). In some preferred embodiments the reaction takes place at 60-120 °C for about 10 hours. In general, curing time or reaction time should increase as the temperature decreases. For instance, it seems better to react the polymers in 70 °C for 24 hours than 12 hours. When a certain reaction time is achieved there seems to be no benefit nor disadvantage to continue the reaction at elevated temperature. Considering the suitable reaction temperature ranges for both B₂O₃ with PDMS-OH, and the first composition 201a with the second composition 201b, the preferable temperature is thus in a range of 60 °C - 150 °C, for example 65 °C, 70 °C, 80 °C, 90 °C, 100 °C, 110 °C, 115 °C, 120 °C, or 130 °C, and most preferably 70 °C. Fig. 2d shows the effect of curing temperature increasing from 70 °C to 150 °C. Reaction between ingredients generally happens at the same time, thus leads to a more complex interpenetrating polymer network.

It is found that by decreasing the curing temperature (from 120 °C to 70 °C) and ratio of polymer base 201a to curing agent 201b (from 10:1 to 5:1) there is twofold increase for strength at break (δ_{break}) and elongation at break (ε_{break}) values.

As an example, the method of manufacturing a self-healing elastomer according to the present invention may comprise the following steps:
- mixing boron oxide nanoparticles (B₂O₃, 80 nm, 0.85 wt.% of the final product), hydroxyl-group containing poly(dimethylsiloxane) (PDMS-OH, **18000-22000** cSt, 65 - 90 wt.% of the final product), and a siloxane base, i.e. the first composition;
- stirring the mixture for more than one hour, for example, by using a magnetic stirrer or motar crushing at room temperature, until the color is uniformed;
- applying vacuum degassing for removing air bubbles, if any;
- adding
- adding a siloxane crosslinker, i.e. the second composition, to the mixture, while using magnetic stirring at room temperature, wherein the weight ratio of siloxane base and the siloxane crosslinker is 1:1 to 50:1, and the weight percentage of the siloxane base and the siloxane crosslinker combined is 5 - 30 wt.% of the final product,
- vacuum may be used for removing air bubbles, if any;
- heating the mixture at a at an elevated temperature, e.g. 60-120 °C, for about 10 hours;
- obtaining the final product, i.e. the self-healing elastomer.

As discussed above, the amounts of the ingredients used in the method according to the present application affect the properties of the self-healing elastomer and can be adjusted according to the actual needs in different applications.

In some preferred embodiments, the following ingredients are used in the method:
- 0.85 wt.% of boron trioxide (B₂O₃) nanoparticles with average diameter of 80 nm,
- 84.15 wt.% of hydroxyl-terminated polydimethylsiloxane (PDMS-OH) with kinematic viscosity of 18,000-22,000 cSt at 25 °C,
- 15 wt.%, when measured in combined, of polysiloxane precursors, being
   ∘ a first composition comprising a siloxane base, and
   ∘ a second composition comprising a siloxane crosslinker,
   wherein the ratio by weight of the first composition and the second composition is 5:1;
and the curing temperature for the polysiloxane is 70 °C.

In said preferred embodiments, the resulting self-healing elastomer can be aged that leads to a state where it can be actuated and recovered to shape increasingly fast.

In some embodiments, the amount of the ingredients are used in the method as follows:
the ratio by weight of the B₂O₃ and PDMS-OH is 0.1:99.9 to 5:95;
the ratio by weight of the polysiloxane precursors (201) and the first mixture (101) is 5:95 to 30:70, wherein the first composition (201a) comprises a siloxane base, and the second composition (201b) comprises a siloxane crosslinker, and the ratio by weight of the first composition (201a) and the second composition (201b) is 1:1 to 50:1.

### EXAMPLES

### Example 1 - method of manufacturing interpenetrating PBS-PDMS

In this section, the novel interpenetrating PBS-PDMS according to the present invention is simply denoted as PBS-PDMS.

Materials. Hydroxyl terminated poly(dimethylsiloxane) (PDMS-OH) with kinematic viscosities of 850-1,150 cSt and 18,000-22,000 cSt was purchased from Sigma-Aldrich. Boron oxide nanoparticles (B₂O₃, 80 nm) were purchased from SkySpring Nanomaterials Inc. Sylgard 184 was purchased from Sil-mid Limited. All materials were used as received.

### Synthesis of self-healing elastomer.

Different elastomer compositions, as shown in Table 1, were prepared by varying the viscosity of hydroxyl terminated poly(dimethylsiloxane)(PDMS-OH), weight percent (wt.%) of Sylgard 184, ratio of polymer base to curing agent (A:B), curing temperature (°C), and wt.% of boron oxide nanoparticles (B₂O₃ NPs).

0.84 - 2.12 wt.% of B₂O₃ nanoparticles were mixed with mortal to Sylgard 184 polymer base (~2 wt.%) until a homogeneous solution arise yielding a whitish colour. Then 69.3 - 89.1 wt.% PDMS-OH with viscosities of 850-1150 and/or 18,000-22 000 cSt were added to the solution. The solution was vigorously mixed in room temperature before continuing the mixing with magnetic stirrer. Then, remainder of the polymer base (~13-28 wt.%) and curing agent (~1.3-6.0 wt.%) were added to the solution while still continuously mixing the solution. The solution was vacuum degassed to release the entrapped voids. The solution was dropped casted onto petri dish or onto a glass substrate with release film. The cross-linking of the poly(boronsiloxane)-poly(dimethylsiloxane) elastomers (denoted as PBS-PDMS) were carried out at elevated temperatures of 70-150 °C. After peeling the elastomer from the release film, we cooled the samples in room temperature for at least 24 hours before any measurements were taken.

**Table 1 | PBS-PDMS elastomer compositions**

| **Composition name** | **Viscosity of PDMS-OH** | **Amount of Sylgard 184** | **Ratio of polymer base to curing agent** | **Curing temperature** | **Amount of B₂O₃ NPs** |
|---|---|---|---|---|---|
| | **(cSt)** | **(wt.%)** | **(A:B)** | **(°C)** | **(wt.%)** |
| PBS-PDMS-1^{†} | 850-1150 | 15.0 | 10:1 | 120 | 0.85 |
| PBS-PDMS-2^{‡} | 850-1150/18,000-22,000 | 15.0 | 10:1 | 120 | 0.85 |
| PBS-PDMS-3^{§} | 18,000-22,000 | 15.0 | 10:1 | 120 | 0.85 |
| PBS-PDMS-4^{§} | 18,000-22,000 | 20.0 | 10:1 | 120 | 0.85 |
| PBS-PDMS-5^{§} | 18,000-22,000 | 25.0 | 10:1 | 120 | 0.85 |
| PBS-PDMS-6^{§} | 18,000-22,000 | 15.0 | 10:1 | 70 | 0.85 |
| PBS-PDMS-7^{§} | 18,000-22,000 | 15.0 | 5:1 | 70 | 0.85 |
| PBS-PDMS-8^{§} | 18,000-22,000 | 15.0 | 2.5:1 | 70 | 0.85 |
| PBS-PDMS-9^{§} | 18,000-22,000 | 15.0 | 5:1 | 120 | 0.85 |
| PBS-PDMS-10^{§} | 18,000-22,000 | 15.0 | 5:1 | 150 | 0.85 |
| PBS-PDMS-11^{§} | 18,000-22,000 | 15.0 | 5:1 | 70 | 1.49 |
| PBS-PDMS-12^{§} | 18,000-22,000 | 15.0 | 5:1 | 70 | 2.12 |
| † = PDMS-OH viscosity 850-1150 sCt (100 wt.%); ‡ = PDMS-OH with viscosities of 850-1150 cSt and 18,000-22,000 cSt mixed with ratio 1:1; § = PDMS-OH viscosity 18,000-22,000 cSt (100 wt.%); | | | | | |

### Example 2 - Mechanical properties and performance comparison.

**Mechanical characterization.** Mechanical properties were characterized by performing stress-strain tests with Linkman TST350 Tensile Stress Testing system with 200 N force transducer in a room temperature (20 °C). Rectangular samples had dimensions approximately 25.0 mm x 7.0 mm x 1.5 mm (that correspond to thickness, width, thickness). As difference between a nominal stress and true stress was considerable, we calculated true stress based on the nominal stress with an assumption that the amorphous elastomer is isotropic and incompressible (i.e., volume does not change with compression). The true cross-sectional area calculated was observed to be of approximate of our experimental results. The distance between clamps was fixed to approximately 2.5-5.0 mm (depending on composition). Each measurement was repeated at least three times. At least ten samples were measured for each composition. Unless otherwise stated, all mechanical characterization were performed at a rate of 5%s⁻¹. **Fig. 2a****-e** shows mean, minimum, and maximum values (fitted with third degree polynomial function).

**Self-healing characterization.** We defined the self-healing efficiencies for elastomer as a proportion of toughness recovered relative to the original toughness of a pristine elastomer. It does not only take into account the stress at break (δ_{break}) but also elongation at break (εₘₐₓ). This corresponds to area under the stress-strain curve which defines a material ability to absorb energy until fracturing. Unless otherwise stated, the self-healing tests were conducted by creating obliquely cut with a razor that was perpendicularly to direction of elongation. The dissociation areas were 100% of the cross-sectional area of the sample under test. Unless otherwise stated, cut surfaces were aligned within 10 seconds after samples were bisected (in all cases). However, when testing surface aging effects cut surfaces were kept apart for 24 hours in room temperature. PBS-PDMS-1 and PBS-PDMS-2 elastomers were not entirely separated to properly align cut-surfaces (due to softness). Each measurement was repeated at least three times.

Table 2 shows elastic modulus (MPa), toughness (MJm⁻³), strain at break (%), stress at break (MPa), electic recovery, and self-healing efficiency for elastomers with varied composition. The properties were measured in a room temperature (20 °C) with rate of 5%s⁻¹. Results are expressed as a mean value ± std.dev.

**Self-healing in ambient conditions.** We studied the self-healing properties of our elastomers. Most of the composition could fully recover their original properties after healing **(Table 2).** We assume effective amount of B₂O₃ NPs is present in the compositions leading to sufficient number dipole-dipole interactions. Remarkably, the pristine specimens with the fasted shape recovery times had the most efficient self-healing for toughness (η = 97.6 ± 4.8% (mean ± std.dev)). We found that self-healing rate is excellent in comparison to other universal healing materials.

The first-rate healing capabilities are evident from our experimental results. The specimens could be elongated to 290 ± 50% strain with rate of 60-100%s⁻¹ after healing for 23.6 ± 5.5 seconds.

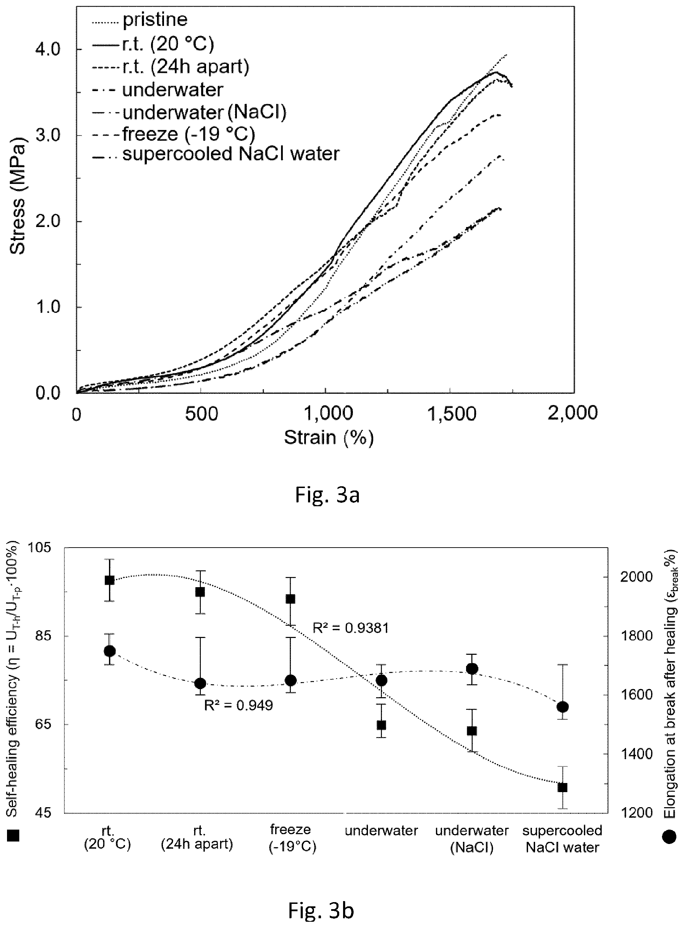

Fig. 3a shows stress-strain curves for pristine (PBS-PDMS-7) and healed specimens when elongated to ε_{break}. Fig. 3b shows self-healing properties for specimens (PBS-PDMS-7) in various ambient conditions.

**Table 2 | Summary of mechanical and self-healing properties for elastomers**

| **Sample** | **Mechanical properties** | | | | | **Self-healing properties (after 2 hours in r.t.)** | |
|---|---|---|---|---|---|---|---|
| | **Young's modulus** | **Toughness** | **Strain at break** | **Stress at break** | **Elastic recovery** | **% recovery of toughness** | **% recover of strain at break** |
| | **(MPa)** | **(MJm⁻³)** | **(%)** | **(MPa)** | | | |
| PBS-PDMS-1 | 0.04 ± 0.00 | 0.09 ± 0.01 | 261 ± 21 | 0.08 ± 0.01 | No residual strain | 82.5 ± 15.0 | 96.9 ± 0.8 |
| PBS-PDMS-2 | 0.37 ± 0.00 | 1.30 ± 0.02 | 435 ± 31 | 0.84 ±0.01 | No residual strain | 84.4 ± 4.4 | 95.2 ± 1.4 |
| PBS-PDMS-3 | 0.42 ± 0.00 | 12.31 ± 0.75 | 1073 ± 20 | 2.05 ± 0.00 | No residual strain | 87.9 ± 7.0 | 94.9 ± 0.4 |
| PBS-PDMS-4 | 0.55 ± 0.00 | 10.00 ± 0.00 | 801 ± 10 | 2.56 ± 0.00 | No residual strain | 78.1 ± 1.1 | 97.8 ± 0.1 |
| PBS-PDMS-5 | 1.12 ± 0.00 | 4.98 ± 0.00 | 380 ± 10 | 2.56 ± 0.00 | No residual strain | 27.6 ± 1.9 | 66.0 ± 1.2 |
| PBS-PDMS-6 | 0.29 ± 0.00 | 24.97 ± 7.67 | 1710 ± 224 | 3.41 ± 0.02 | No residual strain | 89.5 ± 1.3 | 97.5 ± 1.5 |
| PBS-PDMS-7 | 0.35 ± 0.00 | 26.01 ± 1.16 | 1770 ± 270 | 3.69 ± 0.04 | No residual strain | 98.0 ± 4.8 | 97.9 ± 1.8 |
| PBS-PDMS-8 | 0.10 ± 00 | N/A | N/A | N/A | No residual strain | 94.9 ± 4.1 | 99.0 ± 3.5 |
| PBS-PDMS-9 | 0.28 ± 0.00 | 15.81 ± 0.35 | 1530 ± 60 | 2.88 ± 0.00 | No residual strain | 88.1 ± 2.1 | 90.9 ± 2.9 |
| PBS-PDMS-10 | 0.26 ± 0.0 | 22.90 ± 3.10 | 1910 ± 490 | 2.07 ± 0.0 | Residual strain | 79.4 ± 20.0 | 88.8 ± 19.5 |
| PBS-PDMS-11 | 0.31 ± 0.00 | 24.63 ± 3.39 | 1715 ± 100 | 3.85 ± 0.02 | No residual strain | 98.1 ±1.3 | 96.5 ± 1.9 |
| PBS-PDMS-12 | 0.29 ± 0.00 | 30.23 ± 0.63 | 2120 ± 120 | 3.87 ± 0.02 | No residual strain | 85.0 ± 16.0 | 97.0 ± 6.2 |

### Mechanical hysteresis and aging..

A specimen, PBS-PDMS-7, was repeatably measured by elongating to 500% strain (for 5 cycles for each measurement) and healed with varied times inbetween measurements (healing times from ~2 hours to 8 days). A pristine specimen (PBS-PDMS-7) was elongated close to its breaking point (ε_{break}), and immediately after unloading elongated again. Measurements were taken in a room temperature (20 °C). Three specimens (PBS-PDMS-7 composition) were aged by different methods. A specimen 1 was elongated to ε_{break} before the second measurement. A specimen 2 was cycled at 500% strain for 10 cycles before measurement. A specimen 3 was hold with static load for 3 times (500% strain) for 800 seconds before measurement (rate 25%s⁻¹).

Inevitable change of mechanical hysteresis and forcible strain hardening is evident with specimens repeatably elongated over plastic region of hard phase (even as healing times significantly increase). However, we found that the specimens can stabilize themselves (as values for E, δ_{break}, and ε_{break} remain constant). We found elastomer can be brought into this stable state by numerous of ways, while some of them can seemed better than others. Such aging process has been undiscovered with other self-healing materials which relates the unique structure of our elastomer having additional cross-linking components in its siloxane precursors.

The artificially aged specimen is very different from a pristine specimen as through aging process it adapts to withstand a very rapid elongation (rate of 330%s⁻¹) to very large deformations (~1,000% strain) without fracturing. More impressively, aged specimen can recover its shape with rate up to -660%s⁻¹ in strain hardening region. We found the shape recover times after elongation **to** ε_{break} to decrease by order of magnitude..

Even though a simplistic Kelvin-Voigt model may explain parts of the complex mechanical behaviour observed, it is in principle valid for static systems and not compatible with dynamic system capable of changing over time (such as a function of time). A more appropriate viscoelastic model for our material system could be derived by postulating Schapery-type viscoelastic model. The model includes viscoelastic components for Helmholtz free energy and rate of energy dissipation, and entropy imbalance (known as Clausius-Duhem inequality). We point out the entropy-driven elasticity is valid as it also accounts for a possibility to reversible phase transition occur on large deformation .

We assume that the artificial aging process leads to the three-dimensional interpenetrated network "reconfiguring" itself to adapt to a large deformation. There is permanent change in viscoelastic components (Helmholtz free energy and rate of energy dissipation) as shape recovery times change. We propose there likely exists a breakage of "non-ideal" permanent junction points located in "unfavourable" position for a deformation to take place (as sudden change of stress gradient can be present). A factor that could account a strain hardening becoming more visible with aged specimens is a possibility for Poisson's ratio becoming variable (instead of constant) leading to discrepancy as true stress is calculated on assumption it being a constant.

## Claims

1. A method for manufacturing a self-healing elastomer (200), comprising
- preparing, with respect to the total weight of the self-healing elastomer (200),
• 0.1 - 5 wt.% of boron trioxide (B₂O₃) in the form of nanoparticles,
• 65 - 90 wt.% of hydroxyl-terminated polydimethylsiloxane (PDMS-OH)
• 5 - 30 wt.%, when measured in combination, of polysiloxane precursors (201), being
∘ a first composition (201a) comprising a siloxane base, and
∘ a second composition (201b) comprising a siloxane crosslinker, wherein the ratio by weight of the first composition (201a) and the second composition (201b) is 1:1 to 50:1;
- homogeneously mixing the B₂O₃ nanoparticles, PDMS-OH, and the first composition (201a), thereby obtaining a mixture (301),
- reacting the mixture (301) and the second composition (201b) at an elevated temperature ranging from 60 °C to 150 °C, endpoints inclusive, thereby obtaining the self-healing elastomer (200).

2. The method according to claim 1, wherein the siloxane base is a siloxane-based polymer containing at least one ethylenically unsaturated group and the first composition further comprises a branched siloxane-based polymer, optionally a surface modifier which preferably contains at least one ethylenically unsaturated group.

3. The method according to claim 1 or 2, wherein the second composition (201b) further comprises the siloxane-based polymer containing at least one ethylenically unsaturated group.

4. The method according to any of claims 1-3, wherein the siloxane-based polymer containing at least one ethylenically unsaturated group is dimethylvinyl-terminated dimethylsiloxane.

5. The method according to any of claims 1-4, wherein the siloxane crosslinker is dimethyl, methylhydrogen siloxane.

6. The method according to any of claims 1-5, wherein the branched siloxane-based polymer is 1,1,1,5,5,5-hexamethyl-3,3-bis[(trimethylsily)oxy]-trisiloxane.

7. The method according to any of claims 2-6, wherein the B₂O₃ is in an amount of 0.40 - 3.00 wt.%, preferably 0.65 - 1.90 wt.%, more preferably 0.75 - 1.45 wt.%, for example 0.85 wt.%.

8. The method according to any of claims 1-7, wherein the PDMS-OH is in an amount of 69 - 89.5 wt.%, for example 69.3 - 89.1 wt.%, preferably 75 - 88 wt.%, more preferably 77 - 86 wt.%, for example 84 wt.%.

9. The method according to any of claims 1-8, wherein
- the polysiloxane precursors combined is in an amount of 10 - 20 wt.%, preferably 13 - 17 wt.%, for example 15 wt.%, wherein
∘ the ratio by weight of the first composition (201a) and the second composition (201b) is 2.5:1 to 10:1.

10. The method according to any of claims 1-9, wherein the PDMS-OH has a kinematic viscosity ranging from 850 - 25000 cSt, more preferably 18000-22000 cSt, determined by a device complying measurement standard ASTM D2196-20 at 25 °C.

11. The method according to any of claims 1 to 10, wherein the B₂O₃ is in a form of nanoparticles having an average diameter of 50 - 200 nm, preferably 80 - 100 nm, determined by using a transmission electron microscope.

12. The method according to any of claims 1 to 11, wherein, with respect to the total weight of the self-healing elastomer (200), the boron trioxide (B₂O₃) is 1 wt.% and has an average diameter of 80 nm, the PDMS-OH is 85 wt.% and has a kinematic viscosity of 18,000-22,000 cSt at 25 °C, the polysiloxane precursors (201) is 14 wt.%, wherein the ratio by weight of the first composition (201a) and the second composition (201b) is 5:1; and wherein reacting the mixture (301) and the second composition (201b) takes place at 70 °C.

13. The method according to any of claims 1 to 12, wherein the boron trioxide (B₂O₃) is firstly mixed with a small amount of the first composition (201a), and then the PDHS-OH is mixed in, and then the remainder of the first composition (201a) is mixed in, thereby obtaining the mixture (301).

14. A self-healing elastomer, comprising
- an interpenetrating polymer network, comprising
• a polyborosiloxane-based polymer, and
• a polydimethylsiloxane-based polymer,
wherein the self-healing elastomer further comprises B₂O₃ nanoparticles.

15. The self-healing elastomer of claim 14 obtained by the method according to any of claims 1-13.

## Patentansprüche

1. Verfahren zur Herstellung eines selbstheilenden Elastomers (200), umfassend
- Vorbereiten, in Bezug auf das Gesamtgewicht des selbstheilenden Elastomers (200),
• 0,1-5 Gew.-% Bortrioxid (B₂O₃) in Form von Nanopartikeln,
• 65-90 Gew.-% hydroxylterminiertes Polydimethylsiloxan (PDMS-OH)
• 5-30 Gew.-%, wenn sie in Kombination gemessen werden, von Polysiloxanvorläufern (201), wobei
∘ eine erste Zusammensetzung (201a) ist, die eine Siloxanbasis umfasst, und
∘ eine zweite Zusammensetzung (201b) ist, die einen Siloxanvernetzer umfasst, wobei das Gewichtsverhältnis zwischen der ersten Zusammensetzung (201a) und der zweiten Zusammensetzung (201b) 1:1 bis 50:1 beträgt;
- homogenes Mischen der B₂O₃-Nanopartikel, PDMS-OH und der ersten Zusammensetzung (201a), wodurch eine Mischung (301) erhalten wird,
- Umsetzen der Mischung (301) und der zweiten Zusammensetzung (201b) bei einer erhöhten Temperatur im Bereich von 60 °C bis 150 °C, Endpunkte eingeschlossen, wodurch das selbstheilende Elastomer (200) erhalten wird.

2. Verfahren nach Anspruch 1, wobei die Siloxanbasis ein Polymer auf Siloxanbasis ist, das mindestens eine ethylenisch ungesättigte Gruppe enthält, und die erste Zusammensetzung ferner ein verzweigtes Polymer auf Siloxanbasis, optional einen Oberflächenmodifikator umfasst, der vorzugsweise mindestens eine ethylenisch ungesättigte Gruppe enthält.

3. Verfahren nach Anspruch 1 oder 2, wobei die zweite Zusammensetzung (201b) ferner das Polymer auf Siloxanbasis umfasst, das mindestens eine ethylenisch ungesättigte Gruppe enthält.

4. Verfahren nach einem der Ansprüche 1 bis 3, wobei das Polymer auf Siloxanbasis, das mindestens eine ethylenisch ungesättigte Gruppe enthält, Dimethylvinylterminiertes Dimethylsiloxan ist.

5. Verfahren nach einem der Ansprüche 1 bis 4, wobei der Siloxanvernetzer Dimethyl-, Methylhydrogensiloxan ist.

6. Verfahren nach einem der Ansprüche 1 bis 5, wobei das verzweigte Polymer auf Siloxanbasis 1,1,1,5,5,5-Hexamethyl-3,3-bis[(trimethylsily)oxy]-trisiloxan ist.

7. Verfahren nach einem der Ansprüche 2 bis 6, wobei das B₂O₃ in einer Menge von 0,40 bis 3,00 Gew.-%, vorzugsweise 0,65 bis 1,90 Gew.-%, noch bevorzugter 0,75 bis 1,45 Gew.-%, beispielsweise 0,85 Gew.-%, vorliegt.

8. Verfahren nach einem der Ansprüche 1 bis 7, wobei das PDMS-OH in einer Menge von 69 bis 89,5 Gew.-%, zum Beispiel 69,3 bis 89,1 Gew.-%, vorzugsweise 75 bis 88 Gew.-%, noch bevorzugter 77 bis 86 Gew.-%, zum Beispiel 84 Gew.-%, vorliegt.

9. Verfahren nach einem der Ansprüche 1 bis 8, wobei
- die Polysiloxanvorläufer in einer Menge von 10 bis 20 Gew.-%, vorzugsweise 13 bis 17 Gew.-%, zum Beispiel 15 Gew.-%, kombiniert werden, wobei
∘ das Gewichtsverhältnis zwischen der ersten Zusammensetzung (201a) und der zweiten Zusammensetzung (201b) 2,5:1 bis 10:1 beträgt.

10. Verfahren nach einem der Ansprüche 1 bis 9, wobei das PDMS-OH eine kinematische Viskosität im Bereich von 850 bis 25000 cSt, vorzugsweise 18000 bis 22000 cSt, aufweist, bestimmt mit einer Vorrichtung, die dem Messstandard ASTM D2196-20 bei 25 °C entspricht.

11. Verfahren nach einem der Ansprüche 1 bis 10, wobei das B₂O₃ in Form von Nanopartikeln vorliegt, die einen durchschnittlichen Durchmesser von 50-200 nm, vorzugsweise 80-100 nm, aufweisen, bestimmt unter Verwendung eines Transmissionselektronenmikroskops.

12. Verfahren nach einem der Ansprüche 1 bis 11, wobei, bezogen auf das Gesamtgewicht des selbstheilenden Elastomers (200), das Bortrioxid (B₂O₃) 1 Gew.-% beträgt und einen mittleren Durchmesser von 80 nm aufweist, das PDMS-OH 85 Gew. % beträgt und eine kinematische Viskosität von 18.000-22.000 cSt bei 25 °C aufweist, die Polysiloxanvorläufer (201) 14 Gew.-% betragen, wobei das Gewichtsverhältnis der ersten Zusammensetzung (201a) und der zweiten Zusammensetzung (201b) 5:1 beträgt; und wobei die Umsetzung der Mischung (301) und der zweiten Zusammensetzung (201b) bei 70 °C erfolgt.

13. Verfahren nach einem der Ansprüche 1 bis 12, wobei das Bortrioxid (B₂O₃) zunächst mit einer kleinen Menge der ersten Zusammensetzung (201a) vermischt wird, dann das PDHS-OH eingemischt wird und anschließend der Rest der ersten Zusammensetzung (201a) eingemischt wird, wodurch die Mischung (301) erhalten wird.

14. Selbstheilendes Elastomer, umfassend
- ein interpenetrierendes polymeres Netzwerk, umfassend
• ein auf Polyborosiloxan basierendes Polymer und
• ein auf Polydimethylsiloxan basierendes Polymer,
wobei das selbstheilende Elastomer ferner B₂O₃-Nanopartikel umfasst.

15. Selbstheilendes Elastomer nach Anspruch 14, erhalten nach dem Verfahren nach einem der Ansprüche 1 bis 13.

## Revendications

1. Procédé de fabrication d'un élastomère autorégénérant (200), comprenant
- la préparation, par rapport au poids total de l'élastomère autorégénérant (200),
• 0,1 à 5 % en poids de trioxyde de bore (B₂O₃) sous forme de nanoparticules,
• 65 à 90 % en poids de polydiméthylsiloxane à terminaisons hydroxyles (PDMS-OH)
• 5 à 30 % en poids, calculés sur la base de la composition totale, de précurseurs de polysiloxane (201), étant
∘ une première composition (201a) comprenant une base de siloxane, et
∘ une seconde composition (201b) comprenant un agent de réticulation à base de siloxane, dans lequel le rapport pondéral entre la première composition (201a) et la seconde composition (201b) est de 1:1 à 50:1 ;
- le mélange de manière homogène des nanoparticules de B₂O₃, du PDMS-OH et de la première composition (201a), afin d'obtenir un mélange (301),
- la réaction du mélange (301) et la seconde composition (201b) à une température élevée allant de 60 °C à 150 °C, les limites incluses, afin d'obtenir l'élastomère autorégénérant (200).

2. Procédé selon la revendication 1, dans lequel la base siloxane est un polymère à base de siloxane contenant au moins un groupe éthyléniquement insaturé et la première composition comprend en outre un polymère à base de siloxane ramifié, éventuellement un modificateur de surface qui contient de préférence au moins un groupe éthyléniquement insaturé.

3. Procédé selon la revendication 1 ou 2, dans lequel la seconde composition (201b) comprend en outre le polymère à base de siloxane contenant au moins un groupe éthyléniquement insaturé.

4. Procédé selon l'une quelconque des revendications 1-3, dans lequel le polymère à base de siloxane contenant au moins un groupe éthyléniquement insaturé est un diméthylsiloxane à terminaison diméthylvinyle.

5. Procédé selon l'une quelconque des revendications 1-4, dans lequel l'agent de réticulation siloxane est le diméthylméthylhydrogénosiloxane.

6. Procédé selon l'une quelconque des revendications 1-5, dans lequel le polymère à base de siloxane ramifié est le 1,1,1,5,5,5-hexaméthyl-3,3-bis[(triméthylsily)oxy]-trisiloxane.

7. Procédé selon l'une quelconque des revendications 2-6, dans lequel le B₂O₃ est présent en une quantité de 0,40 à 3,00 % en poids, de préférence de 0,65 à 1,90 % en poids, plus préférablement de 0,75 à 1,45 % en poids, par exemple 0,85 % en poids.

8. Procédé selon l'une quelconque des revendications 1-7, dans lequel le PDMS-OH est présent en une quantité de 69 à 89,5 % en poids, par exemple de 69,3 à 89,1 % en poids, de préférence de 75 à 88 % en poids, plus préférablement de 77 à 86 % en poids, par exemple 84 % en poids.

9. Procédé selon l'un quelconque des revendications 1-8, dans lequel
- les précurseurs de polysiloxane combinés sont présents en une quantité de 10 à 20 % en poids, de préférence de 13 à 17 % en poids, par exemple 15 % en poids, dans lequel
∘ le rapport pondéral entre la première composition (201a) et la seconde composition (201b) est de 2,5:1 à 10:1.

10. Procédé selon l'une quelconque des revendications 1-9, dans lequel le PDMS-OH a une viscosité cinématique allant de 850 à 25 000 cSt, plus préférablement de 18 000 à 22 000 cSt, déterminée par un appareil conforme à la norme de mesure ASTM D2196-20 à 25 °C.

11. Procédé selon l'une quelconque des revendications 1 à 10, dans lequel le B₂O₃ se présente sous une forme de nanoparticules ayant un diamètre moyen de 50 à 200 nm, de préférence de 80 à 100 nm, déterminé en utilisant un microscope électronique à transmission.

12. Procédé selon l'une quelconque des revendications 1 à 11, dans lequel, par rapport au poids total de l'élastomère autorégénérant (200), le trioxyde de bore (B₂O₃) représente 1 % en poids et a un diamètre moyen de 80 nm, le PDMS-OH représente 85 % en poids et a une viscosité cinématique de 18 000 à 22 000 cSt à 25 °C, les précurseurs de polysiloxane (201) représentent 14 % en poids, dans lequel le rapport pondéral entre la première composition (201a) et la seconde composition (201b) est de 5:1 ; et dans lequel la réaction du mélange (301) et la seconde composition (201b) a lieu à 70 °C.

13. Procédé selon l'une quelconque des revendications 1 à 12, dans lequel le trioxyde de bore (B₂O₃) est d'abord mélangé à une petite quantité de la première composition (201a), puis le PDHS-OH est ajouté, et enfin le reste de la première composition (201a) est ajouté, ce qui permet d'obtenir le mélange (301).

14. Elastomère autorégénérant, comprenant
- un réseau de polymères entrecroisés, comprenant
• un polymère à base de polyborosiloxane, et
• un polymère à base de polydiméthylsiloxane,
dans lequel l'élastomère autorégénérant comprend en outre des nanoparticules de B₂0₃.

15. Elastomère autorégénérant selon la revendication 14, obtenu par le procédé selon l'une quelconque des revendications 1-13.
